## Europäisches Patentamt

## European Patent Office

## Office européen des brevets

(19)

(11) Veröffentlichungsnummer: **0 116 163**
**B1**

(12) **EUROPÄISCHE PATENTSCHRIFT**

(45) Veröffentlichungstag der Patentschrift:
**30.03.88**

(51) Int. Cl.⁴: **A 61 C 9/00**

(21) Anmeldenummer: **83112969.7**

(22) Anmeldetag: **22.12.83**

(54) **Gebissmodell und Sockelplatte für ein Gebissmodell.**

(30) Priorität: **19.01.83 DE 3301615**
**27.05.83 DE 3319263**
**03.06.83 DE 3320050**

(43) Veröffentlichungstag der Anmeldung:
**22.08.84 Patentblatt 84/84**

(45) Bekanntmachung des Hinweises auf die Patenterteilung:
**30.03.88 Patentblatt 88/13**

(84) Benannte Vertragsstaaten:
**AT CH DE FR LI**

(56) Entgegenhaltungen:
**EP - A - 0 044 223**
**DE - A - 2 949 697**
**DE - A - 3 124 819**
**DE - U - 7 141 244**
**DE - U - 7 900 692**
**FR - A - 2 433 931**
**US - A - 2 700 219**
**US - A - 3 581 398**
**US - A - 3 838 187**
**US - A - 4 203 219**

(73) Patentinhaber: **Zeiser, Manfred P.Dr., Im Wolfsgalgen 8, D-7141 Schwieberdingen (DE)**

(72) Erfinder: **Zeiser, Manfred P.Dr., Im Wolfsgalgen 8, D-7141 Schwieberdingen (DE)**

ACTORUM AG

**Beschreibung**

Die Erfindung bezieht sich auf ein Gebissmodell gemäss den Merkmalen des Oberbegriffs des Anspruchs 1.

In der DE-A-2 949 697 ist ein Verfahren zur Herstellung eines Gebissmodells beschrieben, bei dem positive Nachbildungen der aus Modellwerkstoff gefertigten Zahnstümpfe lösbar an einer vorgefertigten massiven Sockelplatte aus einem formstabilen Kunststoff festgelegt sind. Dabei werden in die Sockelplatte individuell Bohrungen eingearbeitet, die als Führungselemente für Stifte dienen, die dann in den aushärtenden Modellwerkstoff eingetaucht werden und schliesslich unlösbar in dem Zahnstumpf verankert sind. Dieses Verfahren hat sich in der Zwischenzeit in der Praxis durchgesetzt, weil damit Gebissmodelle mit früher unerreichter Genauigkeit hergestellt werden können. Allerdings muss ein gewisser Zeitaufwand zur Herstellung dieser Führungselemente, d.h. der Bohrungen und zum Einsetzen der Stifte in Kauf genommen werden. Zeitaufwendig ist auch das individuelle Festlegen der Stiftpositionen.

Das Herstellen der Bohrungen und Einsetzen der Stifte entfällt zwar bei der Ausführung nach der US-A-3 581 398, weil anstelle der Stifte ein zahnbogenförmiges Verriegelungsteil verwendet wird. Dieses stegartige Verriegelungsteil wird aber wie die Stifte schliesslich unlösbar im Modell verankert, jedoch lösbar am Sockel geführt, der im übrigen teilweise aus einem aushärtbaren Material und nicht allein aus einer vorgefertigten Sockelplatte besteht. Auch bei dieser Ausführung ist also kein formstabil mit einer Sockelplatte verbundener Wandabschnitt vorhanden und am Modell werden während der Aushärtung des Modellwerkstoffes keine Führungsflächen ausgebildet.

Aus der FR-A-2 433 931 ist eine wannenartige Sockelform grosser Bauhöhe bekannt, die jedoch nicht mit einer flachen Sockelplatte gleichgesetzt werden kann. Zwischen einem wannenartigen Sockel und einer Sockelplatte besteht nämlich ein wesentlicher Unterschied deshalb, weil in die Wanne zunächst ein Sockel hineingeformt und daran erst das Modell angeformt wird, während bei der anderen Ausführung eine dünne Platte direkt als Sockel dient und das Modell darauf aufgebaut wird. Auch in dem DE-U-7 141 244 ist eine wannenartige Sockelform grosser Bauhöhe offenbart, wobei im Gegensatz zu der zuvor genannten Vorveröffentlichung diese Wanne einen Boden aufweist. In den Boden sind Durchbrüche eingearbeitet, die bei dieser bekannten Ausführung jedoch lediglich als Ausstosslöcher dienen und keine Führungsflächen am Zahnstumpf ausbilden. Entsprechendes gilt auch für die Ausführung nach der DE-A-3 124 819. Die im Boden dieser wannenartigen Sockelform vorgesehenen Schlitze bilden ebenfalls keine Führungsflächen am aushärtenden Zahnstumpf aus. Vielmehr dienen sie zur Aufnahme eines Ausstossereinsatzes, der seinerseits im Zahnstumpf offenbar unlösbar verankert ist.

Die US-A-2 700 219 zeigt ein Gebissmodell, dessen Zahnstümpfe lösbar an einer vorgefertigten, formstabilen Sockelplatte festgelegt sind, die vorstehende Wandabschnitte aufweist, die als Führungselemente für die Zahnstümpfe dienen und während der Aushärtung des Modellwerkstoffes an den Zahnstümpfen entsprechende Führungsflächen ausbilden. Die vorstehenden Wandabschnitte sind gewissermassen als gleichmässiges Raster ausgebildet und in keiner Weise der Kontur des Zahnbogens angepasst. Deshalb dürfen diese Vorsprünge eine bestimmte Höhe nicht überschreiten, weil sonst die Gefahr bestehen würde, dass diese Vorsprünge – bei einer vorgegebenen Modellhöhe – in Bereiche des Zahnstumpfes ragen würden, die zur Anfertigung eines Zahnersatzteiles originalgetreu erhalten sein müssen. Bei dieser bekannten Ausführung ist daher eine ausreichende Führung der einzelnen aus einem Zahnbogen herausgetrennten Zahnstümpfe nicht möglich. Eine Kippbewegung insbesondere eines schmalen Zahnstumpfes kann bei dieser Ausführung nicht ausgeschlossen werden, denn die Führungselemente ragen kaum in den Zahnstumpf hinein, weil deren Höhe im Verhältnis zur Gesamthöhe des Zahnstumpfes sehr klein ist.

Ausgehend von diesem Stand der Technik liegt der Erfindung die Aufgabe zugrunde, die Führung eines auf einer formstabilen Sockelplatte aufgebauten Gebissmodells zu verbessern, so dass ein lagerichtiges mehrfaches Positionieren einzelner Zahnstümpfe auf dieser Sockelplatte exakt in der ursprünglichen Position möglich ist.

Diese Aufgabe wird erfindungsgemäss mit den kennzeichnenden Merkmalen des Anspruchs 1 gelöst.

Die Erfindung basiert dabei wesentlich auf der Überlegung, dass man grosse Führungsflächen ohne Vergrösserung der Modellhöhe dann erreichen kann, wenn man die Führungselemente an der Sockelplatte in der Höhe und seitlich zueinander versetzt der Kontur des Zahnbogens anpasst. Deshalb werden als Führungselemente Wandabschnitte eines Durchbruchs in der Sockelplatte vorgesehen, so dass auch die Dicke der Sockelplatte zur Vergrösserung der Führungsflächen ausgenutzt wird. Diese die Sockelplatte durchsetzenden Wandabschnitte sind besonders formstabil. Ausserdem wird das Herstellungsverfahren vereinfacht, denn der Durchbruch seitlich der als Führungselemente dienenden Wandabschnitte ermöglicht eine genaue Positionierung der Sockelplatte auf dem mit Kunststoff ausgefüllten Gebissabdruck, der so ausgerichtet wird, dass der Durchbruch und der Zahnbogen der Kieferabformung etwa übereinstimmen.

Ausserdem dient als Führungselement ein Steg, der starr und unlösbar von einer Grundfläche der Sockelplatte senkrecht absteht und in den aushärtenden Modellwerkstoff des Zahnstumpfes eintaucht. Ausgehend von der Grenzfläche zwischen Sockelplatte und Modell sind also Führungselemente in entgegengesetzten Richtungen vorgesehen. Die von den Seitenwänden des Durchbruchs bei der Aushärtung des Modellwerkstoffs gebildeten Führungsflächen am Zahnstumpf liegen also in einer anderen Höhe als die von dem Steg ausgebildeten Führungsflächen.

Dabei ist darauf geachtet, dass der Steg Führungsflächen mittig im Zahnstumpf ausbildet, also an einer Stelle mit der üblicherweise grössten Höhe des Zahnstumpfes. Da der Durchbruch zwangsläufig nicht an der Stelle des Steges liegen kann, muss er seitlich versetzt zum Steg angeordnet sein, also in einem Bereich abnehmender Zahnstumpfhöhe liegen. In diesem Bereich werden aber ausgehend von der Grenzfläche Führungsflächen in der anderen Richtung gebildet, so dass auch in diesem Bereich der Modellzahnstumpf dem Original genau entspricht.

Steg und Durchbruch sind dabei der Kontur des Zahnbogens angepasst, wobei darauf hingewiesen wird, dass natürlich ein kompletter hufeisenförmiger Durchbruch bzw. Steg dann nicht benötigt wird, wenn nur ein Teilmodell hergestellt werden soll. Wichtig ist, dass Durchbruch und Steg so in Bezug zum Modell angeordnet sind, dass möglichst grosse Führungsflächen gebildet werden.

Insgesamt ist also durch die erfindungsgemässe Anordnung der Führungselemente an der Sockelplatte, die auf die Kontur des Zahnbogens abgestimmt ist, und der entsprechenden Ausbildung der Führungsflächen am Zahnstumpf eine wesentlich verbesserte Führung mit einer grösseren flächenmässigen Ausdehnung der Führungsflächen bei kleiner Modellhöhe geschaffen. Die vorliegende Erfindung wird bevorzugt bei einem Kunststoffmodell eingesetzt, weil der üblicherweise verwendete Kunststoff auf Epoxy-Basis keinen Abrieb zeigt und daher eine Führung zwischen einem fest an der Sockelplatte angeformten Wandabschnitt und entsprechenden Führungsflächen am Modell möglich ist. Die einzelnen Zahnstümpfe können daher mehrfach auf die Sockelplatte zurückgesetzt werden, ohne dass dabei ein sich vergrösserndes Spiel zwischen den Wandabschnitten und den Führungsflächen am Modell zu befürchten wäre.

Bei diesen Ausführungen muss zwar in Kauf genommen werden, dass der Zahnstumpf nicht immer genau im Bereich der Kauflächenmitte geführt wird. Untersuchungen haben jedoch ergeben, dass man mit einer geringen Anzahl vorgefertigter Sockelplatten mit unterschiedlichen Steg- oder Durchbruchformen Modelle zu nahezu allen in der Praxis vorkommenden Kieferformen herstellen kann.

Auch wenn der Steg sehr formstabil, also dickwandig ausgeführt ist, kann in der Praxis eine gewisse Kippbewegung des Zahnstumpfes nicht völlig vermieden werden, was zu Ungenauigkeiten bei der Ausbildung eines Zahnersatzteiles führen könnte. Diese Kippbewegung tritt insbesondere bei schmalen Zahnstümpfen im Frontzahnbereich auf.

Ausgehend von der Überlegung und Erkenntnis, dass ein Epoxy-Kunststoff hinreichend dimensionsgenau ist und nur einen vernachlässigbaren Schwund aufweist, wird eine Lösung bevorzugt, bei der ein Zahnstumpf mehrfach durch vorstehende Führungselemente geführt wird. Neben dem Steg, der etwa mittig in den Zahnstumpf eintaucht, wird der Zahnstumpf also noch durch Wandteile auf der Lippen- und/oder Gaumenseite geführt. Besonders bevorzugt wird dabei eine Ausführung mit einem Durchbruch, einem lippenseitig daran anschliessenden Steg sowie einer gaumenseitigen Wand. Durchbruch und Steg erstrecken sich dabei über den gesamten Zahnbogen, während die Wand nur den Frontzahnbereich abdeckt. Die Anzahl der Führungsflächen bzw. deren Grösse wird damit weiter erhöht, sodass eine hochpräzise Führung des Zahnstumpfes an der Sockelplatte gewährleistet ist.

Die die Führungsflächen bildenden Wandabschnitte sollen Führungsrippen oder Führungsrillen aufweisen, die senkrecht zur Sockelplatte verlaufen und zur lagerichtigen Festlegung einzelner ausgesägter Zahnstümpfe auf der Sockelplatte dienen.

Die Erfindung bezieht sich ausserdem auf eine mit dem entsprechenden Durchbruch sowie den Stegen bzw. zusätzlichen Seitenwandteilen ausgerüstete Sockelplatte, die zur Herstellung eines solchen Gebissmodells geeignet ist. Diese Sockelplatte kann direkt in der gebrauchsfertigen Form aus Kunststoff gespritzt sein, wobei sich als Werkstoff besonders der unter dem Handelsnamen Hostaform bekannte Kunststoff eignet, der gute Gleiteigenschaften aufweist. Die Sockelplatte kann nun vergleichsweise dünn ausgeführt werden, weil der Steg und die Seitenwände zur Versteifung beitragen.

Die Sockelplatte kann einen solchen Umriss haben, dass ein kompletter Zahnbogen auf ihr festgelegt werden kann. Zwecks Einsparung von Kosten kann die Sockelplatte aber nur einen Umriss in Form eines Quadranten haben, so dass nur ein halber Zahnbogen festlegbar ist. Insbesondere bei solchen Ausführungen sollen von beiden Grundflächen der Sockelplatte Stege bzw. Seitenwände abstehen. Der Steg auf der Rückseite kann dann zur Festlegung der Sockelplatte in einem Artikulator dienen. Bei spiegelbildlicher Ausbildung der Sockelplatte in Bezug zu deren Mittelebene kann nun aber auch auf der Rückseite ein Modell festgelegt werden, wobei auf der einen Seite aufgrund dieser vorteilhaften Ausbildung der Sockelplatte die linke und auf der anderen Seite der Sockelplatte die rechte Zahnbogenhälfte fixiert werden kann. Für einen kompletten, allerdings zweigeteilten Zahnbogen wird also nur eine Sockelplatte benötigt.

Nach der vorliegenden Erfindung können insbesondere solche Modelle kostengünstig hergestellt werden, bei denen als Modellwerkstoff ein Kunststoff, beispielsweise ein Epoxy- oder Epimin-Kunststoff verwendet wird. Derartige Kunststoffe sind unter dem Handelsnamen Araldit oder Impredur beziehbar. Sie haben ein neutrales Dimensionsverhalten, expandieren also nicht während des Aushärtens, was für die Genauigkeit der Modellherstellung sehr wichtig ist.

Nach der vorliegenden Erfindung kann man aber auch Modelle mit dem in der Zahntechnik üblichen Superhartgips herstellen. Bei Verwendung dieses Werkstoffes muss jedoch beachtet werden, dass er in trockenem Zustand eine gewisse Sprödigkeit aufweist. Würde man einen solchen Zahnstumpf aus Hartgips nicht exakt in der ursprünglichen Lage auf den Steg aufsetzen, dessen Breite wegen unvermeidlicher Herstellungstoleranzen nicht über die gesamte Länge konstant ist, könnte der Zahnstumpf durch Keilwirkung des Steges brechen. Bei Verwendung der genannten Kunststoffe tritt dieses Problem dagegen nicht auf, weil diese auch nach dem Aushärten eine gewisse Elastizität besitzen.

Die Erfindung und weitere vorteilhafte Ausgestaltungen werden nachstehend anhand der in der Zeichnung dargestellten Ausführungsbeispiele näher erläutert. Es zeigen:

Fig. 1 eine Ansicht auf eine Sockelplatte,

Fig. 2 einen Schnitt entlang der Schnittlinie II–II,

Fig. 3 Ober- und Unterseite einer weiteren Sokkelplatte und

Fig. 4 einen Schnitt entlang der Schnittlinie XIV–XIV.

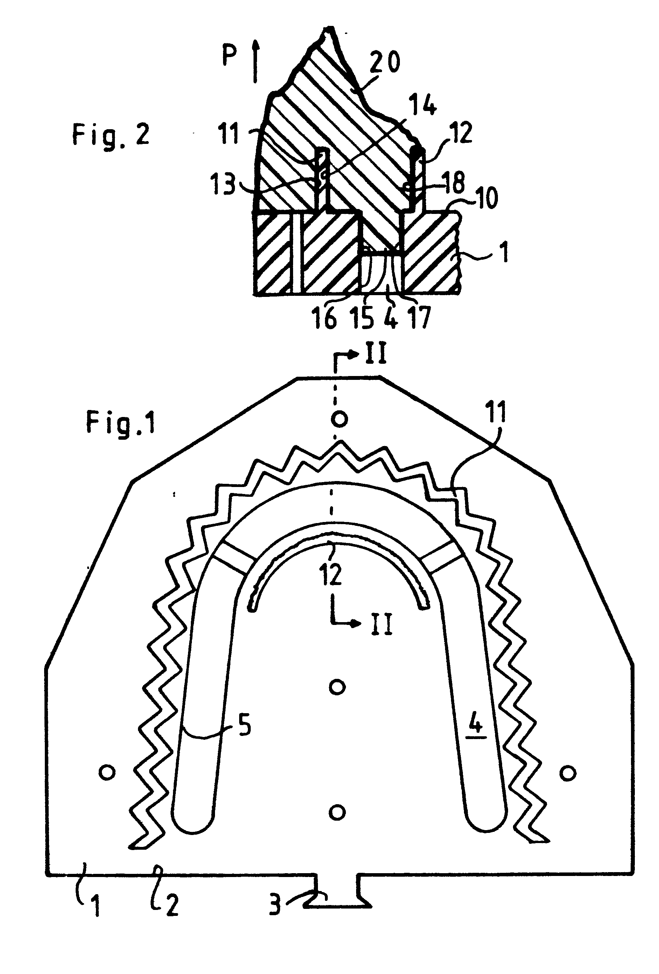

Die Fig. 1 und 2 zeigen das derzeit bevorzugte Ausführungsbeispiel der Erfindung. Die Sockelplatte 1 mit einem im wesentlichen polygonalen Umriss, der der Form des Gebissmodells annähernd entspricht, ist einstückig aus einem formbeständigen Kunststoff gespritzt. Von einer Seitenfläche 2 steht ein schwalbenschwanzartiger Ansatz 3 zur Festlegung der Sockelplatte 1 in einem Arbeitsgerät ab.

Die Sockelplatte 1 hat einen Durchbruch 4 mit einer zahnbogenförmigen Kontur. Die parallelen und senkrecht zur Sockelplatte verlaufenden Wandabschnitte 5 dieses Durchbruches dienen als Führungselement für ein Gebissmodell.

Von der oberen Grundfläche 10 der Sockelplatte 1 steht senkrecht ein Steg 11 ab, der gezackt ist, insgesamt aber ebenfalls eine zahnbogenförmige Kontur aufweist und sich lippenseitig an den Durchbruch 4 anschliesst. Dieser Steg ist einstückig an die Sockelplatte angeformt und mit dieser unlösbar verbunden. Obwohl er verhältnismässig dünnwandig ist, soll er starr und formstabil ausgebildet sein, da er ebenfalls als Führungselement dient.

Im Abstand von diesem Steg 11 ist auf der Gaumenseite jenseits des Durchbruches 4 eine Seitenwand 12 mit einer senkrecht stehenden Innenfläche einstückig an die Sockelplatte 1 angeformt. Auch diese Seitenwand 12 dient als Führungselement.

Wesentlich für die vorliegende Erfindung ist nun, dass diese Führungselemente während der Aushärtung des Modellwerkstoffes an dem Zahnstumpf entsprechende Führungsflächen ausbilden. So entstehen beidseitig des Steges Führungsflächen 13 und 14 an dem in Fig. 2 dargestellten Zahnstumpf 20. Der Modellwerkstoff fliesst auch in den Durchbruch 4 und bildet dort einen Ansatz 15 mit parallelen Führungsflächen 16 und 17. Schliesslich bildet auch die Seitenwand 12 mit ihrer Innenfläche eine Führungsfläche 18 an dem Zahnstumpf 20 aus.

Das erfindungsgemässe Gebissmodell wird wie folgt hergestellt:

In einem Arbeitsgerät wird mittels des Führungsansatzes 3 die vorgefertigte Sockelplatte 1 festgelegt. Dann wird der Abdrucklöffel mit dem Gebissabdruck so in dem Arbeitsgerät ausgerichtet ung fixiert, dass der Steg 11 etwa mittig in den Abdruck zeigt. Der Abdruck wird mit Modellwerkstoff ausgefüllt. Ausserdem wird Modellwerkstoff auf den Steg 11 und ggf. die Seitenwand 12 aufgetragen. Anschliessend wird die Sockelplatte parallel verschoben und auf den Abdruck aufgelegt. Damit der Modellwerkstoff nicht an unerwünschten Stellen abfliessen kann, empfiehlt es sich, um den Abdruck eine Manschette vorzugsweise aus Wachs zu legen. Die Praxis hat gezeigt, dass man bei Verwendung eines Kunststoffes als Modellwerkstoff die Sockelplatte auf den Abdruck erst aufsetzen sollte, wenn dieser Kunststoff aus der flüssigen Phase in die klebrige Phase übergeht.

Nach dem Aushärten des Modellwerkstoffes kann man den Zahnstumpf ohne Schwierigkeiten in Pfeilrichtung P von der Sockelplatte 1 abziehen. Nach Bearbeitung des Zahnstumpfes 20 kann dieser wieder in die ursprüngliche Lage auf die Sockelplatte zurückgesetzt werden, wobei der Zahnstumpf unmittelbar auf der oberen Grundfläche 10 der Sockelplatte 1 aufsitzt. Da der Steg eine unregelmässige Form aufweist, ist die ursprüngliche Lage genau reproduzierbar.

Im folgenden sollen nun noch einige Einzelheiten und Alternativen kurz erläutert werden, die in den Zeichnungen nicht oder zumindest nicht besonders deutlich hervorgehoben sind.

Der Durchbruch 4 hat insgesamt eine zahnbogenförmige Kontur und kann durch quer verlaufende Rippen, von denen in Fig. 1 zwei angedeutet sind, in mehrere Formkammern unterteilt werden. Der Durchbruch 4 ermöglicht die einwandfreie Ausrichtung relativ zum Gebissabdruck, weil der Gebissabdruck durch den Durchbruch 4 hindurch angepeilt werden kann. Abweichend von der Darstellung in Fig. 1 kann der Durchbruch 4 auf der Lippenseite gezackt, also mit Rillen und entsprechenden Vorsprüngen in der Seitenwand versehen sein. Diese Rillen und Vorsprünge verlaufen senkrecht zur Sockelplatte 1 und dienen dazu, dass später ein aus dem Modell ausgesägter Zahnstumpf 20 wieder lagerichtig auf die Sockelplatte 1 aufgesetzt werden kann. Natürlich kann auch die gegenüberliegende gaumenseitige Seitenwand des Durchbruches 4 mit Retentionen versehen sein. Alle führenden Wandabschnitte verlaufen senkrecht zur Sockelplatte 1. Die nicht führenden Aussenwände können jedoch schräg zur Sockelplatte 1 verlaufen, damit die aus Kunststoff, vorzugsweise aus einem glasfaserverstärkten Polyamid gespritzte Sockelplatte 1 leichter aus dem Werkzeug entformt werden kann. Im übrigen können auch alle vorstehenden Stege und Wandabschnitte gezackt oder mit Riffeln versehen sein. Die Dicke der Sockelplatte kann sich ausgehend von dem Steg zum Rand hin verjüngen. Dadurch können Lufteinschlüsse im Modellwerkstoff entweichen, zumal der Steg 11 nicht notwendigerweise den Durchbruch 4 vollständig umgeben muss, sondern ggf. senkrechte Schlitze aufweisen kann.

Bei der bevorzugten Ausführung nach Fig. 1 hat der Steg 11 geradlinige Abschnitte. Der Steg 11 könnte aber auch wellig ausgebildet sein. Der Steg könnte auch ballige Seitenflächen aufweisen. Die Höhe des Steges kann über die Länge variieren, wozu ergänzend angemerkt wird, dass man störende Stegabschnitte mit einer Fräse abtragen kann. Ggf. könnte man auch daran denken, an einer Sockelplatte 1 mehrere Stege 11 vorzugsweise parallel zueinander anzuformen und die dann nicht benötigten Stege später zu entfernen. Die Sockelplatte 1 wäre dann universell verwendbar, doch wären zusätzlich Arbeitsschritte notwendig.

Bei einem Kunststoffmodell bereitet das erstmalige Abheben des Gesamtmodells von der Sockelplatte manchmal erhebliche Schwierigkeiten. Um dieses erstmalige Abheben zu erleichtern, können die Bohrungen durch die Sockelplatte 1, von denen in Fig. 1 fünf dargestellt sind, Gewindestifte geführt sein, die gleichmässig angedreht werden und dann den Modellbogen gleichmässig aus seiner Führung herausdrücken.

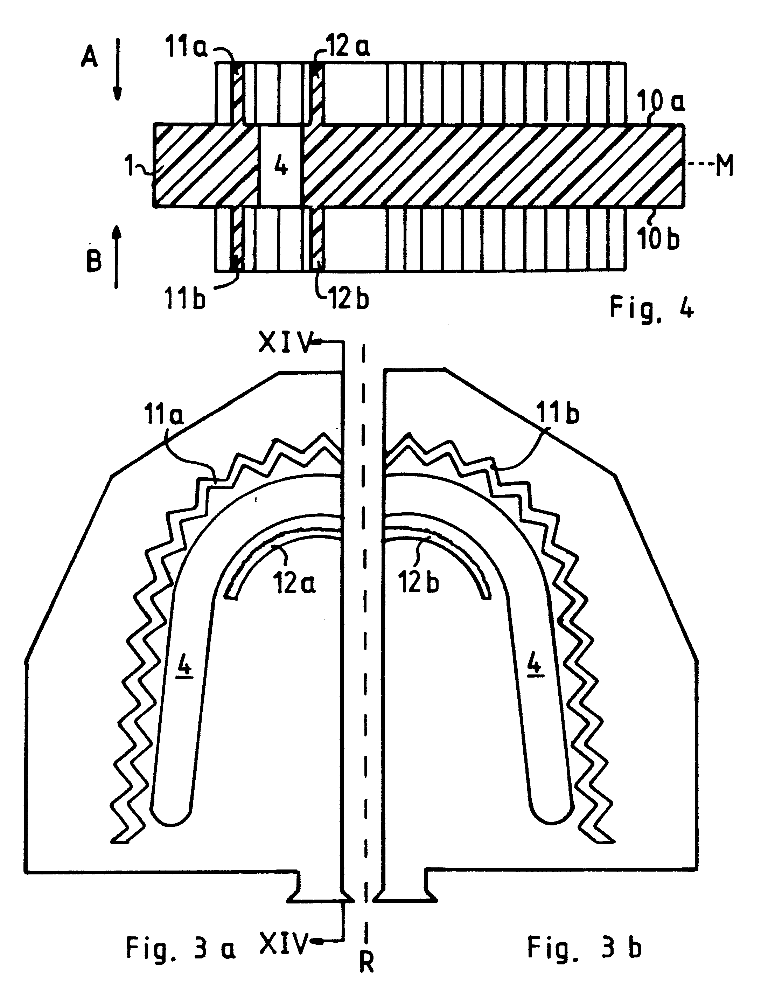

Die Fig. 3 und 4 zeigen ein weiteres Ausführungsbeispiel der Erfindung, wobei auf dieser Sockelplatte 1 nur ein halber Zahnbogen fixiert werden kann. Fig. 3a zeigt dabei eine Ansicht in Pfeilrichtung A, Fig. 3b eine Ansicht in Pfeilrichtung B auf die in Fig. 4 im Schnitt dargestellte Sockelplatte. Die Sockelplatte 1 ist bezüglich einer parallel zur oberen Grundfläche 10 gedachten Mittelebene M symmetrisch ausgebildet. Sie hat also einen von der oberen Grundfläche abstehenden Steg 11a und einen von der unteren Grundfläche abstehenden Steg 11b. Diese beiden Stege liegen deckungsgleich untereinander. Ausserdem ist gaumenseitig an die obere Grundfläche 10a und an die untere Grundfläche 10b einstückig je eine Seitenwand 12a bzw. 12b angeformt. Die Symmetrie beim Durchbruch 4 ist selbstverständlich ebenfalls gegeben. Eine solche Sockelplatte entsteht gedanklich dadurch, dass man beispielsweise die beiden Hälften der Sockelplatte nach Fig. 1 um die Rotationsachse R gegeneinander verschwenkt. Daraus wird erkennbar, dass die Oberseite zur Fixierung der linken Zahnbogenhälfte, die Unterseite der Sockelplatte dagegen zur Fixierung der rechten Zahnbogenhälfte ausgenutzt werden kann. Man benötigt also nur eine einzige derartige Sockelplatte, die universell verwendbar ist. Dabei kann der jeweils dem Modell gegenüberliegende Steg 11 zur Befestigung der Sockelplatte in einem Artikulator dienen, also die Splitcastrippen ersetzen. Die Befestigung im Artikulator kann in bekannter Weise über Gips erfolgen. Da jedoch alle Sockelplatten einen identischen Zick-Zack-Steg haben, kann man eine Giessharzform mit einem entsprechenden Zick-Zack-Schlitz verwenden, der im Artikulator befestigt wird. In einem Artikulator wird diese Giessharzform im oberen Teil, in einem anderen Artikulator im unteren Teil fixiert. In dieser Giessharzform kann dann diese Sockelplatte eingesetzt werden, sodass nur das entsprechende Modell des Gegenkiefers im Artikulator in umständlicher Weise mit Gips festgelegt werden muss. Der Steg bei dieser Sockelplatte erfüllt also zwei Funktionen. Er dient einmal zur Festlegung des Modells an der Sockelplatte und ein anderes Mal zur Fixierung der Sockelplatte an der im Artikulator fesgelegten Giessharzform.

Insgesamt wird damit ein Gebissmodell geschaffen, dessen einzelne Zahnstümpfe exakt an der Sockelplatte fixiert und geführt sind. Die richtige Lage der Zahnstümpfe auf der Sockelplatte ist nach dem Zurücksetzen der Zahnstümpfe durch die Form des Zick-Zack-Steges sowie durch Führungsrillen und Führungskerben mehrfach gewährleistet. Dabei werden Arbeitsgänge im Vergleich zu bekannten Herstellungsverfahren eingespart. Ausserdem werden keine zusätzlichen Führungsstifte benötigt, sodass die Modelle kostengünstiger hergestellt werden können.

**Patentansprüche**

1. Gebissmodell zur Anfertigung von Zahnersatzteilen wie Einlagegussfüllungen, Kronen, Brücken, Gebissprothesen und dgl., bei dem positive Nachbildungen der aus Modellwerkstoff gefertigten Zahnstümpfe (20) lösbar an einer vorgefertigten formstabilen Sockelplatte (1) festgelegt und über Führungselemente geführt sind, wobei als Führungselemente formstabile und einstückig an die Sockelplatte (1) angeformte Wandabschnitte dienen, die während der Aushärtung des Modellwerkstoffes an den Zahnstümpfen (20) entsprechende Führungsflächen ausbilden, dadurch gekennzeichnet, dass als Führungselemente unmittelbar die Seitenwände (15) eines zahnbogenförmigen Durchbruches (4) durch die Sockelplatte (1) dienen und dass als Führungselemente ausserdem die Seitenwände eines von der Grundfläche (10) der Sockelplatte (1) hochstehenden Steges (11) dienen, der im wesentlichen zahnbogenförmig ausgerichtet ist und etwa mittig in den Zahnstumpf (20) eintaucht.

2. Gebissmodell nach Anspruch 1, dadurch gekennzeichnet, dass im Abstand von dem Steg (11) an die Sockelplatte (1) ausserdem wenigstens abschnittsweise wenigstens eine Seitenwand (12) mit einer senkrecht zur Sockelplatte (1) stehenden Innenfläche einstückig angeformt ist, die ebenfalls an dem Zahnstumpf (20) während des Aushärtens des Modellwerkstoffes Führungsflächen (18) formt.

3. Gebissmodell nach Anspruch 2, dadurch gekennzeichnet, dass beidseitig neben dem Durchbruch (4) von der Sockelplatte (1) Stege (11) bzw. Seitenwände (12) abstehen, die an dem Zahnstumpf (20) während des Aushärtens des Modellwerkstoffes Führungsflächen formen.

4. Gebissmodell nach wenigstens einem der vorhergehenden Ansprüche, dadurch gekennzeichnet, dass die die Führungsflächen bildenden Wandabschnitte senkrecht zur Sockelplatte ausgerichtet sind und damit die Führungsflächen (13, 14, 16, 17, 18) parallel zueinander verlaufen.

5. Gebissmodell nach wenigstens einem der vorhergehenden Ansprüche, dadurch gekennzeichnet, dass als Modellwerkstoff ein Kunststoff, vorzugsweise ein Epoxy- oder ein Epimin-Kunststoff verwendet wird.

6. Gebissmodell nach wenigstens einem der Ansprüche 1 bis 4, dadurch gekennzeichnet, dass als Modellwerkstoff ein an sich bekannter Hartgips verwendet wird.

7. Sockelplatte für ein Gebissmodell nach wenigstens einem der vorhergehenden Ansprüche, dadurch gekennzeichnet, dass sie einen Durchbruch (4) mit einer zahnbogenförmigen Kontur aufweist und dass von der Grundfläche (10) oder Sockelplatte (1) formstabil und unlösbar wenigstens ein Steg (11) mit einer im wesentlichen zahnbogenförmigen Ausrichtung senkrecht absteht.

8. Sockelplatte nach Anspruch 7, dadurch gekennzeichnet, dass auf der Lippenseite und auf der Gaumenseite des Durchbruches (4) je ein Steg (11) bzw. eine Seitenwand (12) vorgesehen sind, wobei der lippenseitige Steg (11) bzw. Seitenwandabschnitt den gesamten Zahnbereich abdeckt, während der gaumenseitige Steg bzw. die Seitenwand (12) nur den Frontzahnbereich überdeckt.

9. Sockelplatte nach Anspruch 7 oder 8, dadurch gekennzeichnet, dass die die Führungsflächen bildenden Abschnitte des Durchbruches (4) und/oder des Steges (11) und/oder der Seitenwände (12) wenigstens abschnittsweise gezackt, d.h. zickzackförmig ausgebildet bzw. mit senkrecht verlaufenden Führungsrillen versehen sind.

10. Sockelplatte nach wenigstens einem der Ansprüche 7 bis 9, dadurch gekennzeichnet, dass der Durchbruch (4) durch quer verlaufende Rippen in mehrere Formkammern aufgeteilt ist.

11. Sockelplatte nach wenigstens einem der Ansprüche 7 bis 10, dadurch gekennzeichnet, dass von beiden Grundflächen (10a, 10b) Stege (11a, 11b) und ggf. Seitenwände (12a, 12b) abstehen.

12. Sockelplatte nach Anspruch 11, dadurch gekennzeichnet, dass sie bezüglich einer Mittelebene (M) parallel zur Grundfläche symmetrisch ausgebildet ist.

13. Sockelplatte nach Anspruch 11 oder 12, dadurch gekennzeichnet, dass sie einen quadrantenförmigen Umriss aufweist.

14. Sockelplatte nach wenigstens einem der Ansprüche 7 bis 13, dadurch gekennzeichnet, dass sie direkt in der gebrauchsfertigen Form massiv aus Kunststoff gespritzt ist.

## Claims

1. Denture model for producing replacement parts for teeth such as insert cast fillings, crowns, bridges, sets of dentures and the like, whereby positive replicas of tooth stumps (20) produced from modelling material are fastened to a preformed base plate (1) of stable shape so that they can be detached and run over guide components, whereby wall sections formed in one piece on the base plate (1) and of stable shape are used as guide components and whereby these wall sections form corresponding guide surfaces whilst the modelling material is setting on the tooth stumps (20), characterised in that the side walls (5) of a tooth curve-shaped opening (4) through the base plate (1) are used directly as the guide components and in that the side walls of a web (11) which extends upwards from the base surface (10) of the base plate (1) are also used as guide components, whereby the web is substantially aligned in a tooth curve shape and is inserted approximately centrally in the tooth stump (20).

2. Denture model according to claim 1, characterised in that at least one side wall (12) is also formed in one piece onto the base plate (1) at least by sectors with a clearance from the web (11) and with an internal surface which is at right angles to the base plate (1) and which also forms guide surfaces (18) on the tooth stump (20) whilst the modelling material is setting.

3. Denture model according to claim 2, characterised in that, webs (11) or side walls (12) stand away from the base plate (1) on both sides in the vicinity of the opening (4), whereby the webs or side walls are formed on the tooth stump (20) whilst the modelling material is setting.

4. Denture model according to at least one of the preceding claims, characterised in that the wall sections forming the guide surfaces are aligned so that they are at right angles to the base plate and so that the guide surfaces (13, 14, 16, 17 and 18) run parallel to each other.

5. Denture model according to at least one of the preceding claims, characterised in that a plastic, preferably an epoxy or an epimine plastic are used for the modelling material.

6. Denture model according to at least one of claims 1 to 4, characterised in that a hart plaster known in itself is used for the modelling material.

7. Base plate for a denture model according to at least one of the preceding claims, characterised in that it is provided with an opening (4) with a tooth curve-shaped contour and in that at least one web (11) stands away at right angles from the base surface (10) of the base plate (1) so that it is of stable shape and non-detachable in a substantially tooth curve-shaped arrangement.

8. Base plate according to claim 7, characterised in that a web (11) or a side wall (12) are provided in each case on the lip side and on the palate side of the opening (4), whereby the web (11) or side wall section on the lip side cover the complete area of the teeth, whilst the web or the side wall (12) on the palate side only cover the front area of the teeth.

9. Base plate according to claim 7 or 8, characterised in that the sections of the opening (4) and/or the web (11) and/or the side walls (12) forming the guide surfaces are at least provided in sections with points, i.e. are of zig-zag construction or are provided with vertically running guide grooves.

10. Base plate according to at least one of claims 7 to 9, characterised in that the opening (4) is divided into several form chambers by ribs running at right angles.

11. Base plate according to at least one of claims 7 to 10, characterised in that webs (11a and 11b) and where applicable side walls (12a and 12b) are at distance from both base surfaches (10a and 10b).

12. Base plate according to claim 11, characterised in that it is constructed symmetrically in relation to a middle plane (M) parallel to the base surface.

13. Base plate according to claim 11 or 12, characterised in that it is provided with a quadrant-shaped periphery.

14. Base plate according to at least one of claims 7 to 13, characterised in that it is directly injected solidly from plastic in the form ready for use.

## Revendications

1. Modèle de dentier pour fabriquer des parties de substitution dentaires telles que des incrustations, des couronnes, des bridges, des prothèses d'appareil et parties similaires, dans lequel des empreintes positives des moignons dentaires (20) fabriqués en matériau de modelage sont fermement positionnées de manière libérable sur une plaque de base (1) préfabriquée à constance de forme, et sont guidées par l'intermédiaire d'éléments de guidage, ces éléments de guidage étant constitués par des zones de paroi à constance de forme qui sont moulées d'un seul tenant sur la plaque de base (1) et qui, lors du durcissement du matériau de modelage, forment sur les moignons dentaires (20) des surfaces de guidage correspondantes, caractérisé par le fait que les éléments de guidage sont constitués directement par les parois latérales (5) d'un évidement (4) en forme d'arceau dentaire traversant la plaque de base (1); et par le fait que les éléments de guidage sont en outre constitués par les parois latérales d'une membrure (11) qui fait saillie vers le haut au-delà de la surface de fond (10) de la plaque de base (1), qui est orientée pour l'essentiel en forme d'arceau dentaire et qui pénètre, sensiblement contralement, dans le moignon dentaire (20).

2. Modèle de dentier selon la revendication 1, caractérisé par le fait qu'au moins une paroi latérale (12) présentant une surface interne s'étendant perpendiculairement à la plaque de base (1) est en outre, au moins par zones, moulée d'un seul tenant sur la plaque de base (1), à distance de la membrure (11), et forme également des surfaces de guidage (18) sur le moignon dentaire (20), lors du durcissement du matériau de modelage.

3. Modèle de dentier selon la revendication 2, caractérisé par le fait que des membrures (11) ou, respectivement, des parois latérales (12), dépassant de part et d'autre de la plaque de base (1) à côté de l'évidement (4), forment des surfaces de guidage sur le moignon dentaire (20) lors du durcissement du matériau de modelage.

4. Modèle de dentier selon au moins l'une des revendications précédentes, caractérisé par le fait que les zones de paroi formant les surfaces de guidage sont orientées perpendiculairement à la plaque de base, de sorte que les surfaces de guidage (13, 14, 16, 17, 18) s'étendent parallèlement les unes aux autres.

5. Modèle de dentier selon au moins l'une des revendications précédentes, caractérisé par le fait qu'une matière plastique est utilisée en tant que matériau de modelage, de préférence une matière plastique du type époxyde ou épimine.

6. Modèle de dentier selon au moins l'une des revendications 1 à 4, caractérisé par le fait qu'on utilise, en tant que matériau de modelage, un plâtre dur connu par lui-même.

7. Plaque de base pour un modèle de dentier selon au moins l'une des revendications précédentes, caractérisée par le fait qu'elle présente un évidement (4) de configuration périphérique en forme d'arceau dentaire; et par le fait qu'au moins une membrure (11) dépasse perpendiculairement au-delà de la surface de fond (10) de la plaque de base (1), avec constance de forme et de manière inamovible, selon une orientation pour l'essentiel en forme d'arceau dentaire.

8. Plaque de base selon la revendication 7, caractérisée par le fait qu'une membrure respective (11) ou une paroi latérale respective (12) est à chaque fois prévue sur la face labiale et sur la face palatale de l'évidement (4), la membrure (11) ou la zone de paroi latérale labiale recouvrant toute la région dentaire, tandis que la membrure ou la paroi latérale (12) palatale recouvre seulement la région dentaire frontale.

9. Plaque de base selon la revendication 7 ou 8, caractérisée par le fait que les régions de l'évidement (4) et/ou de la membrure (11) et/ou des parois latérales (12), qui forment les surfaces de guidage, sont réalisées dentelées au moins par zones, c'est-à-dire en forme de zigzag, ou bien sont respectivement pourvues de rainures de guidage s'étentant verticalement.

10. Plaque de base selon au moins l'une des revendications 7 à 9, caractérisée par le fait que l'évidement (4) est scindé en plusieurs compartiments moulés, par l'intermédiaire de nervures s'étendant transversalement.

11. Plaque de base selon au moins l'une des revendications 7 à 10, caractérisée par le fait que des membrures (11a, 11b) et éventuellement des parois latérales (12a, 12b) font saillie au-delà des deux surfaces de fond (10a, 10b).

12. Plaque de base selon la revendication 11, caractérisée par le fait qu'elle est de réalisation symétrique par rapport à un plan médian (M), parallèlement à la surface de fond.

13. Plaque de base selon la revendication 11 ou 12, caractérisée par le fait qu'elle possède un pourtour en forme de quadrant.

14. Plaque de base selon au moins l'une des revendications 7 à 13, caractérisée par le fait qu'elle est venue d'injection d'un seul bloc en matière plastique, directement sous la forme prête à l'utilisation.

Fig. 2

Fig.1

A

11a   12a

10a

1   4   ---M

B   10b

11b   12b

Fig. 4

XIV

11a   11b

12a   12b

4   4

Fig. 3a   XIV   Fig. 3b

R